# EUROPÄISCHE PATENTSCHRIFT

(11) **EP 1 493 318 B1**
(45) Veröffentlichungstag und Bekanntmachung des Hinweises auf die Patenterteilung: **28.09.2016**
(21) Anmeldenummer: 04012966.0
(22) Anmeldetag: 02.06.2004
(51) Int. Cl.: A01D 41/127

(54) **Verfahren zur Steuerung eines Dreschwerks eines Mähdreschers**
Method for the control of a threshing assembly of a harvester
Procédé de control d'un ensemble de battage pour moissonneuse-batteuse

(30) Priorität: 18.06.2003 DE 10327758
(43) Veröffentlichungstag der Anmeldung: 05.01.2005
(73) Patentinhaber: CLAAS Selbstfahrende Erntemaschinen GmbH, 33428 Harsewinkel (DE)
(72) Erfinder: Behnke, Willi, 33803 Steinhagen (DE); Dammann, Martin, 33428 Harsewinkel (DE)

(56) Entgegenhaltungen:
- DE-C- 19 800 238
- GB-A- 2 107 489
- US-A- 3 606 742
- US-A- 4 348 855

## Beschreibung

Die Erfindung betrifft ein Verfahren zur Steuerung eines Dreschwerks eines Mähdreschers, bei dem bestimmte Parameter des Dreschwerks hinsichtlich eines für bestimmte Emtebedingungen festgelegten Soll-Erntegutdurchsatzes auf einen Optimalwert eingestellt werden. Darüber hinaus betrifft die Erfindung einen Mähdrescher mit einer Steuereinrichtung zur Durchführung eines solchen Verfahrens.

Mähdrescher sind mit den verschiedensten Arbeitsaggregaten zur Bearbeitung des geernteten Gutstroms ausgestattet. Zu den wesentlichsten Arbeitsaggregaten gehören u. a. das Dreschwerk, um den aus zu entkörnendem Getreide bestehenden Gutstrom zunächst zu dreschen, eine dem Dreschwerk nachgeordnete Trenneinrichtung wie beispielsweise ein Schüttler oder ein Rotor, um die noch im gedroschenen Gutstrom enthaltenen Kömer von den weiteren Bestandteilen des gedroschenen Gutstroms zu separieren, und eine in der Regel aus mehreren Sieben und einem Gebläse bestehende Reinigungseinrichtung, um die Kömer von Beimengen wie Spreu und Kurzstroh zu trennen. Die unterschiedlichsten Parameter dieser Arbeitsaggregate, beispielsweise der Dreschkorbabstand und die Dreschtrommeldrehzahl des Dreschwerks oder die Gebläseleistung und die Siebweiten der Reinigungseinrichtung, müssen in Abhängigkeit vom jeweiligen Erntegut und den sonstigen Emtebedingungen passend eingestellt werden, um einen geplanten Ernteeinsatz optimal durchzuführen. Hierbei gibt es unterschiedliche Zielvorgaben. Eine dieser Zielvorgaben besteht darin, eine möglichst geringe Verlustrate zu erreichen. Eine weitere Zielvorgabe besteht wegen des hohen Zeitdrucks während der kurzen Emteperiode darin, einen hohen Durchsatz bzw. eine hohe Flächenleistung zu erreichen, d. h. in möglichst kurzer Zeit zu ernten. Ungünstigerweise sind diese Zielvorgaben nicht unabhängig voneinander, sondern mit zunehmendem Emtegutdurchsatz nehmen im Allgemeinen auch die Verluste zu. Die Gesamtzielvorgabe besteht daher meistens in einem Kompromiss zwischen einer noch akzeptablen Verlustrate und einer schnellen Erledigung des Ernteeinsatzes. Aufgrund der verschiedensten Eigenschaften der unterschiedlichen Erntegut- bzw. Fruchtarten sowie der unterschiedlichsten sonstigen Emtebedingungen wie Reifezustand des Emteguts, Kornfeuchte, Strohanteil, Strohfeuchte, Korngröße, Bestandsdichte etc. ist es selbst für erfahrene Bediener oft nicht einfach, sämtliche Parameter der Arbeitsorgane des Mähdreschers passend einzustellen. Daher werden in modernen Mähdreschern mit komfortableren Steuereinrichtungen die Einstellwerte aus einer Speichereinrichtung oder aus einer Tabelle abgeleitet, welche zuvor anhand von Testversuchen beim Hersteller des Mähdreschers oder vom Bediener des Mähdreschers selbst aufgezeichnet wurde. Ein solches Verfahren, bei dem die Einstellparameter für die Arbeitsorgane des Mähdreschers unter Eingabe einer Erntegutart und weiterer erntegutspezifischer Größen sowie anhand der Zielvorgabe für den geplanten Ernteeinsatz aus einer Speichereinrichtung entnommen werden können, wird z. B. in der DE 198 00 238 C1 beschrieben. Die Arbeitsaggregate des Mähdreschers werden dabei auf solche Optimalwerte eingestellt, dass bei den angegebenen Emtebedingungen, d. h. den Emteguteigenschaften und den sonstigen Bedingungen wie Bodenbeschaffenheit, Feuchtigkeit etc., und bei Einhaltung eines vorher festgelegten optimalen Soll-Erntegutdurchsatz ein vertretbarer Verlustwert erreicht wird. Mit Hilfe dieser Einstellungen wird dann das gewünschte Ziel erreicht, dass der Mähdrescher möglichst wirtschaftlich bei einem vertretbaren Ernteverlust arbeitet. Der Fahrer hat lediglich noch die Aufgabe, die Erntegeschwindigkeit - d. h. die Fahrgeschwindigkeit des Mähdreschers - so zu wählen, dass tatsächlich der vorgegebene Soll-Emtegutdurchsatz eingehalten wird, hinsichtlich dessen die Parameter der Arbeitsaggregate auf die Optimalwerte eingestellt wurden.

Ungünstigerweise kann jedoch der angestrebte optimale Soll-Erntegutdurchsatz nicht immer eingehalten werden, weil plötzlich auftretende hinderliche Emtebedingungen die erforderliche Erntegeschwindigkeit nicht zulassen. Zu solchen hinderlichen äußeren Erntebedingungen zählen beispielsweise sog. Lagergetreide, Gutflussprobleme im Schneidwerk, steinige Bereiche im Boden, starke Bodenunebenheiten oder eine Überladung von Erntegut während der Fahrt. Ebenso kann durch einen zu vorsichtigen Fahrer verhindert werden, dass der angestrebte Emtegutdurchsatz erreicht wird. Im Erntegut selbst begründete hinderliche Emtebedingungen, d. h. hinderliche Emteguteigenschaften sind z. B. eine zu hohe Stroh- und/oder Komfeuchte oder Unkraut im Erntegutbestand. Der Fahrer ist dann gezwungen, die Emtegeschwindigkeit herabzusetzen. Ebenso können äußere Emtebedingungen auch dazu führen, dass der Fahrer die Emtegeschwindigkeit plötzlich heraufsetzen muss, beispielsweise wenn zu befürchten ist, dass das Wetter umschlägt und zuvor ein bestimmtes Feldstück unbedingt noch abgeerntet werden muss. All diese Fälle führen dazu, dass der tatsächliche aktuelle Emtegutdurchsatz vom Soll-Erntegutdurchsatz, hinsichtlich dessen die Maschinenparameter optimal eingestellt wurden, abweicht.

Jede größere Abweichung des Erntegutdurchsatzes vom Soll-Erntegutdurchsatz ist aber nachteilig, unabhängig davon, ob es sich um einen zu niedrigen oder zu hohen Emtegutdurchsatz handelt. Ist nämlich der tatsächliche Emtegutdurchsatz geringer als der Soll-Emtegutdurchsatz, kann dies dazu führen, dass die Drescheinrichtung des Mähdreschers die zu geringe Emtegutmenge zu stark drischt. Hierbei wird eine Vielzahl von Körnern in der Drescheinrichtung gebrochen (sog. "Kornbruch"). Die beschädigten Körner können nicht mehr verwertet werden, wodurch die Verlustrate erhöht wird. Weiterhin wird durch zu hartes Dreschen das Stroh unnötig in der Drescheinrichtung zerkleinert und gelangt dann durch den Dreschkorb oder über die nachfolgende Trenneinrichtung in die Reinigungseinrichtung. Dies führt zu einer erhöhten Reinigungsbelastung und einer verminderten Reinigungsleistung. Außerdem wird dann mit einem zu hohen Energieeinsatz gearbeitet. Durch die verschiedenen Emteguteigenschaften kann es ferner zur Überlastung einzelner Arbeitsorgane, beispielsweise der Abscheiderotoren, eines Strohhäckslers oder des Antriebsmotors kommen. Ein zu hoher Erntegutdurchsatz führt dagegen dazu, dass das Erntegut in der Drescheinrichtung nicht mehr richtig ausgedroschen wird. Die nicht ausgedroschenen Körner können dann in der nachfolgenden Abscheideeinrichtung nicht vom Stroh separiert werden, so dass eine erhöhte Anzahl von Körnern im Stroh verbleibt und somit die Verlustrate ebenfalls ansteigt.

Um dies zu vermeiden, müsste bei dem o. g. bekannten Verfahren beim Auftreten solcher hinderlichen Emtebedingungen eine vollständige Neuoptimierung der erforderlichen Einstellparameter der Arbeitsaggregate des Mähdreschers erfolgen. Hierbei ist jedoch zu bedenken, dass die meisten hinderlichen Emtebedingungen wie beispielsweise Lagergetreide, Gutflussprobleme, Bodenunebenheiten, eine Emtegut-Überladung während der Fahrt oder auch ein erhöhter Unkrautanteil im Emtegutbestand oft nur vorübergehend bzw. bereichsweise innerhalb der abzuemtenden Fläche auftreten. Dem Fahrer des Mähdreschers würden dann während eines Ernteeinsatzes ständig Neujustagen der verschiedensten Parameter vorgeschlagen, was den Fahrer zusätzlich belastet und von der wichtigsten Aufgabe, die Fahrgeschwindigkeit an die äußeren Bedingungen anzupassen und möglichst schnell wieder die optimale Emtegeschwindigkeit zu erreichen, zusätzlich ablenkt.

Es ist Aufgabe der vorliegenden Erfindung, ein alternatives Steuerungsverfahren und einen entsprechenden Mähdrescher zu schaffen, welche eine schnelle und einfache automatische Reaktion beim Auftreten von hinderlichen Emtebedingungen ermöglichen.

Diese Aufgabe wird durch ein Verfahren der eingangs genannten Art gemäß Anspruch 1 gelöst, bei dem automatisch eine Abweichung des aktuellen Emtegutdurchsatzes vom Soll-Erntegutdurchsatz erkannt und daraufhin zumindest ein Dreschwerkparameter unter Anpassung an den aktuellen Emtegutdurchsatz verstellt wird.

Es wird somit automatisch registriert, dass eine suboptimale Arbeitsauslastung des Dreschwerks vorliegt, und das Dreschwerk wird daraufhin automatisch durch vorübergehende Dejustage der an sich für den optimalen Soll-Erntegutdurchsatz festgelegten Optimalwerte an diese Situation angepasst. Auf diese Weise kann z. B. sicher verhindert werden, dass durch eine plötzliche Reduzierung des Erntegutdurchsatzes die zu geringe Emtegutmenge zu stark gedroschen wird oder dass bei einem plötzlich auftretenden, besonders hohen Erntegutdurchsatz die Emtegutmenge ungenügend ausgedroschen wird. Körner- bzw. Strohbruch, ein übermäßiger Verlust von Erntegut sowie unnötiger Verschleiß und Verbrauch von Betriebsstoffen kann damit vermieden werden. Eine solche vollautomatische Verstellung der Dreschwerkparameter kann sehr schnell geschehen, so dass die Reaktion unmittelbar auf die Änderung im Erntegutdurchsatz erfolgen kann.

Zur Durchführung des erfindungsgemäßen Verfahrens benötigt ein mit einem üblichen Dreschwerk ausgestatteter Mähdrescher eine Steuereinrichtung, gemäß Anspruch 12, um bestimmte Parameter des Dreschwerks auf die Optimalwerte hinsichtlich eines für bestimmte Erntebedingungen festgelegten Soll-Erntegutdurchsatzes einzustellen. Erfindungsgemäß muss diese Steuereinrichtung eine Erntegutdurchsatz-Kontrolleinrichtung aufweisen, welche automatisch eine Abweichung des aktuellen Emtegutdurchsatzes vom Soll-Erntegutdurchsatz erkennt, und muss so ausgebildet sein, dass sie bei einer solchen Abweichung zumindest einen Dreschwerkparameter zur Anpassung an den aktuellen Erntegutdurchsatz verstellt.

Die abhängigen Ansprüche enthalten jeweils besonders vorteilhafte Ausgestaltungen und Weiterbildungen der Erfindung. Dabei kann ein erfindungsgemäßer Mähdrescher auch entsprechend den Merkmalen der Verfahrensansprüche weitergebildet sein und umgekehrt.

Die wichtigsten Parameter des Dreschwerks, die zur Anpassung an den aktuellen Erntegutdurchsatz verstellt werden können, sind die Dreschtrommeldrehzahl und der Dreschkorbabstand. Der Abstand des Dreschkorbs von der Dreschtrommel wird auch als sog. Dreschspalt bezeichnet. Dabei ist es möglich, sowohl nur einen dieser Parameter als auch beide Parameter gleichzeitig zu verstellen. Vorzugsweise wird mit abnehmendem Erntegutdurchsatz die Dreschtrommeldrehzahl verringert und ggf. zusätzlich zur Verringerung der Dreschtrommeldrehzahl der Dreschkorbabstand ebenfalls verringert.

Dabei wird der Dreschkorbabstand gemäß einer vorgegebenen Funktion in Abhängigkeit von der aktuellen Dreschtrommeldrehzahl verstellt. Weiterhin werden besonders bevorzugt die Dreschtrommeldrehzahl und/oder der Dreschkorbabstand in Abhängigkeit von einer Ernteguteigenschaft verstellt. Eine solche Ernteguteigenschaft besteht z. B. darin, inwiefern die Reibung innerhalb des Dreschprozesses notwendig ist, um eine einwandfreie Dreschwirkung zu erreichen. So ist beispielsweise bei bestimmten Getreidearten eine bestimmte Grundreibung innerhalb des Dreschspaltes notwendig. Andere Erntegüter sind dagegen unabhängiger von der Reibung, so dass hier der Korbabstand nur einen geringen Einfluss auf die Dreschwirkung hat. Dementsprechend ist es empfehlenswert, wenn die Funktion des einzustellenden Dreschkorbabstands in Abhängigkeit von der aktuellen Dreschtrommeldrehzahl wiederum in Abhängigkeit von der Getreideart bzw. dem Emteguttyp gewählt wird. Auf diese Weise kann durch die Einstellung lediglich zweier Dreschwerkparameter eine optimale Anpassung an die Abweichung des Erntegutdurchsatzes vom Soll-Erntegutdurchsatz erreicht werden. Damit können sehr einfach die negativen Auswirkungen, die durch eine Abweichung vom optimalen Soll-Erntegutdurchsatz zwangsläufig auftreten, weitgehend reduziert werden.

Um eine Überreaktion der automatischen Steuerung bei nur geringfügigen oder zeitlich begrenzten Abweichungen vom Soll-Erntegutdurchsatz zu vermeiden, wird vorzugsweise erst dann ein Dreschwerkparameter verstellt, wenn der aktuelle Erntegutdurchsatz um einen bestimmten Schwellwert und/oder eine bestimmte erste Zeitspanne vom Soll-Erntegutdurchsatz abweicht.

Besonders bevorzugt wird ein verstellter Dreschwerkparameter automatisch wieder auf den Optimalwert zurückgestellt, wenn der aktuelle Emtegutdurchsatz wieder dem Soll-Erntegutdurchsatz entspricht bzw. um weniger als einen bestimmten Schwellwert vom Soll-Erntegutdurchsatz abweicht. Außerdem wird andernfalls besonders bevorzugt nach Ablauf einer bestimmten zweiten Zeitspanne, in welcher der Soll-Erntegutdurchsatz nicht erreicht wird bzw. der aktuelle Emtegutdurchsatz um mehr als einen bestimmten Schwellwert davon abweicht, automatisch eine vollständige Neujustage der einstellbaren Parameter der Arbeitsorgane des Mähdreschers durchgeführt bzw. es wird dem Fahrer angeboten, diese Parameter optimal neu einzustellen, wobei der aktuelle Emtegutdurchsatzes als neuer Soll-Erntegutdurchsatz angenommen wird.

Dieses Verfahren hat den Vorteil, dass bei nur vorübergehenden hinderlichen Emtebedingungen, bei denen der Fahrer nur relativ kurzzeitig die Erntegeschwindigkeit absenken oder erhöhen muss, eine komplette Justage der Maschinenparameter und der damit verbundene Aufwand für die Maschine und den Fahrer vermieden wird. Stattdessen erfolgt eine schnelle Anpassung des Dreschwerks an die hinderlichen Erntebedingungen und ebenso automatisch eine Rückstellung auf die Optimalwerte, wenn die Bedingungen wieder optimal sind. Nur in den Fällen, in denen sich dann herausstellt, dass sich die Erntebedingungen grundsätzlich verändert haben, erfolgt eine geeignete Neuoptimierung der Maschinenparameter.

Zur Ermittlung des aktuellen Erntegutdurchsatzes bzw. der Abweichung des Emtegutdurchsatzes vom Soll-Erntegutdurchsatz gibt es die verschiedensten Möglichkeiten.

Zum einen kann der aktuelle Gesamt-Erntegutdurchsatz unmittelbar in einem Emteguteinzug des Mähdreschers gemessen werden, sofern dort eine entsprechende Sensoreinrichtung angeordnet ist. Als Sensoreinrichtung kann beispielsweise ein Taster in einem Schrägförderer des Mähdreschers verwendet werden, der die Erntegutschichthöhe ermittelt. Alternativ können auch andere Sensoren verwendet werden, beispielsweise Lichtschranken oder dergleichen.

Des Weiteren können an einem Ausgang einer Abscheideeinrichtung und/oder an einem Ausgang einer Reinigungseinrichtung Verlustmengensensoren angeordnet sein, mit denen jeweils die dort auftretende Verlustmenge bestimmt wird. Diese Verlustmenge ist u. a. ein Maß für die Belastung der jeweiligen Einrichtung und somit auch ein Maß für die Abweichungen des aktuellen Emtegutdurchsatzes vom Soll-Erntegutdurchsatz. Als Verlustmengensensoren können beispielsweise Prallplatten mit Klopfsensoren verwendet werden.

Eine weitere Möglichkeit besteht darin, den Bruchkomanteil zu bestimmen und anhand dieses Bruchkomanteils die Abweichung des aktuellen Emtegutdurchsatzes vom Soll-Erntegutdurchsatz zu bestimmen. Eine Bruchkomsensoreinrichtung wird beispielsweise in der EP 1 095 262 B1 beschrieben.

Weiterhin kann auch eine Abweichung des aktuellen Emtegutdurchsatzes vom Soll-Erntegutdurchsatz durch Messung eines Drehmoments an einer Antriebswelle, beispielsweise der Dreschtrommel, der dem Dreschwerk vorgeschalteten Beschleunigertrommel oder der dem Dreschwerk nachgeschalteten Wendetrommel etc., und/oder durch Messung eines Abtriebsmoments eines Antriebsmotors ermittelt werden.

Vorzugsweise werden dabei die Messwerte mehrerer verschiedener Sensoreinrichtungen genutzt und aus den Messdaten insgesamt dann die Arbeitsauslastung des Mähdreschers, d. h. die Abweichung des Erntegutdurchsatzes vom Soll-Erntegutdurchsatz ermittelt.

Die Erfindung wird im Folgenden unter Hinweis auf die beigefügten Figuren anhand eines Ausführungsbeispiels noch einmal näher erläutert. Es zeigen:
Figur 1 einen schematischen Querschnitt durch einen Mähdrescher,
Figur 2 eine vergrößerte Darstellung des Einzugskanals, des Dreschwerks, der Abtrenneinrichtung, der Reinigungseinrichtung und des Elevators zum Korntank des Mähdreschers gemäß Figur 1 einschließlich der dort angeordneten Sensoreinrichtungen und der erfindungsgemäßen Steuerung,
Figur 3 eine graphische Darstellung zweier Funktionen zur Einstellung des Dreschkorbabstands in Abhängigkeit von der aktuellen Dreschtrommeldrehzahl.

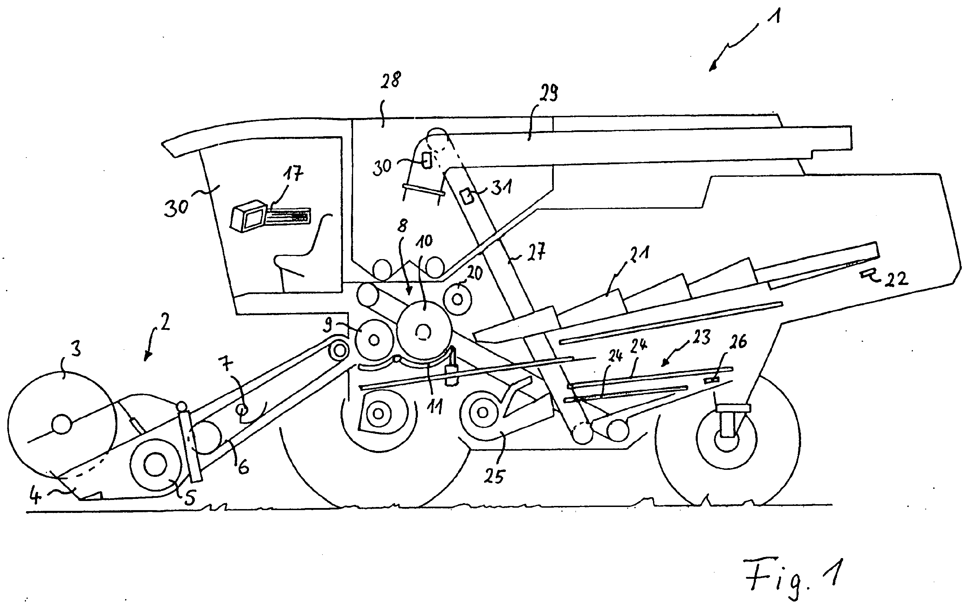

Bei dem in Figur 1 gezeigten Ausführungsbeispiel der Erfindung handelt es sich um einen selbstfahrenden Mähdrescher 1 mit einem sog. Tangential- oder auch Querflussdreschwerk 8 und einem dahinter angeordneten Schüttler 21 als Abscheideeinrichtung. Hierbei handelt es sich um einen Hordenschüttler 21 mit mehreren Schüttlerfahrstufen. Unterhalb des Schüttlers 21 befindet sich eine Reinigungseinrichtung 23, bestehend aus mehreren übereinander angeordneten Sieben 24 und einem Gebläse 25. Die Erfindung ist aber ausdrücklich nicht auf derartige Mähdreschertypen beschränkt.

Die Arbeitsweise eines solchen Mähdreschers 1 wird nachfolgend beschrieben:
Das Erntegut wird zunächst mittels einer Haspel 3 des Mähtischs 2 in Richtung der Mäheinrichtung 4 geneigt und von Mähmessern abgeschnitten. Das Erntegut wird dann über eine Einzugsschnecke 5 und einen Schrägförderer in einem Einzugskanal 6 zum Eingang des Dreschwerks 8 transportiert.

Am Eingang des Dreschwerks 8 befindet sich eine Einlege- bzw. Vorbeschleunigertrommel 9 und dahinter in Gutflussrichtung eine Dreschtrommel 10 mit einer quer zur Gutflussrichtung - d. h. quer zur Mähdrescherlängsachse - liegenden Rotationsachse. Unterhalb der Dreschtrommel 10 befindet sich ein passend geformter Dreschkorb 11. Ein solcher Dreschkorb 11 besteht üblicherweise aus zahlreichen mit Abstand zueinander angeordneten, in Umlaufrichtung der Dreschtrommel 10 halbkreisförmig gebogenen Rippen, die über zahlreiche parallel und quer verlaufende Stege verbunden sind.

Die Dreschtrommel 10 ist an ihrem äußeren Radius mit sog. Dreschleisten bestückt (nicht dargestellt). Das aus dem Einzugskanal 6 kommende Emtegut wird durch die Vorbeschleunigertrommel 9 erfasst und dann weiter von der Dreschtrommel 10 durch den zwischen der Dreschtrommel 10 und dem Dreschkorb 11 befindlichen Dreschspalt gezogen. Dabei wird durch die Dreschleisten das Erntegut gedroschen, d. h. geschlagen und/oder zerrieben, wobei ein Kom-Spreu-Gemisch durch den Dreschkorb 11 nach unten fällt, welches dann der Reinigungseinrichtung 23 zugeführt wird, um die Körner von den Beimengungen, d. h. von Halm- und Spreuteilen, zu trennen.

Vom Dreschwerk 8 wird der gedroschene Gutstrom dann über die Wendetrommel 20 auf den Hordenschüttler 21 gelenkt, durch den die noch im Gutstrom befindlichen Körner sowie evtl. Kurzstroh und Spreu abgetrennt werden. Die Körner, das Kurzstroh und die Spreu gelangen dann ebenfalls in die Reinigungseinrichtung 23, in welcher die Kömer vom Kurzstroh und Spreu getrennt werden. Dies erfolgt in der Weise, dass durch die Sieböffnungen (Löcher, Maschen, Schlitze) in den Sieben 24 mittels des Gebläses 25 Wind hindurchgeblasen wird, welcher das über die Siebe 24 geführte Erntegut auflockert und für das Heraustrennen der spezifisch leichteren Spreu- und Kurzstrohanteile sorgt, während die schweren Emtegutkömer durch die Sieböffnungen fallen. Die Siebe 24 sind hierbei teilweise übereinander angeordnet, so dass das Erntegut in verschiedenen Stufen unterschiedlich fein gesiebt wird. Die Kömer, welche durch sämtliche Siebe 24 der Reinigungsvorrichtung 23 gelangt sind, fallen auf die Auffang- und Führungsböden und werden einer Kornförderschnecke zugeführt. Sie werden dann von einem Elevator 27 in einen Korntank 28 des Mähdreschers 1 befördert und können dort bei Bedarf mit einem Tankentleerförderer 29 auf einen Transportwagen umgeladen werden. Die Teilchen, die in der Reinigungsvorrichtung 23 auf dem oberen der Siebe 24 bis zum hinteren Ende gelangen, sind in der Regel schwerere Teilchen, d. h. Teilchen, welche ein Korn enthalten, bei denen das Korn sich aber nicht vollständig von anderen Bestandteilen des Getreides gelöst hat. Diese Anteile können über einen weiteren Elevator als sog. Überkehr noch einmal zum Dreschwerk 8 zurückgeführt werden. Bestandteile, die nicht durch das obere Sieb 24 fallen, werden als Verlust ausgeworfen. Ebenso wandern das Stroh sowie ein bestimmter Prozentsatz an Verlustkörnern über den Hordenschüttler 21 zum hinteren Ende des Mähdreschers 1 und werden dort ausgeworfen.

Der Mähdrescher 1 weist an verschiedenen Stellen unterschiedliche Sensoreinrichtungen 7, 22, 26, 30, 31 auf. Hierzu zählt zum einen ein Taster 7 im Einzugskanal 6, mit dem die Schichthöhe H des Emteguts im Einzugskanal 6 und somit der Emtegutdurchsatz direkt gemessen werden kann. Als weitere Sensoreinrichtungen befinden sich jeweils Prallplatten mit Klopfsensoren 22, 26 am hinteren Ende unter dem Hordenschüttler 21 und am hinteren Ende unter dem oberen Sieb 24 der Reinigungseinrichtung 23. Außerdem weist der Mähdrescher als zusätzliche Sensoreinrichtung im Korntank am Ausgang des Elevators 27 einen Kombruchdetektor 30, welcher in der Lage ist, beschädigte, d. h. gebrochene Körner nachzuweisen, und ein Ertragsmessgerät 31, welches im Kornelevator 27 angeordnet ist, um die Kömermenge zu bestimmen, auf.

All diese Sensoreinrichtungen 7, 22, 26, 30, 31 sind mit einer Steuereinrichtung 15 verbunden. An diese Steuereinrichtung 15 ist außerdem eine Benutzerschnittstelle 17, beispielsweise mit einem Display 18 und verschiedenen Tasten 19 angeschlossen, mit der ein Fahrer die Steuereinrichtung 15 bedienen bzw. programmieren kann. Die Benutzerschnittstelle 17 befindet sich innerhalb der Fahrerkabine 30. Mit Hilfe der Benutzerschnittstelle 17 kann der Fahrer beispielsweise die Erntebedingungen und das Erntegut vorgeben und den für diese Bedingungen und das jeweilige Erntegut optimalen Soll-Erntegutdurchsatz und die zugehörigen optimalen Maschinenparameter einstellen oder maschinenseitig vorgeschlagene, optimale Parameter setzen.

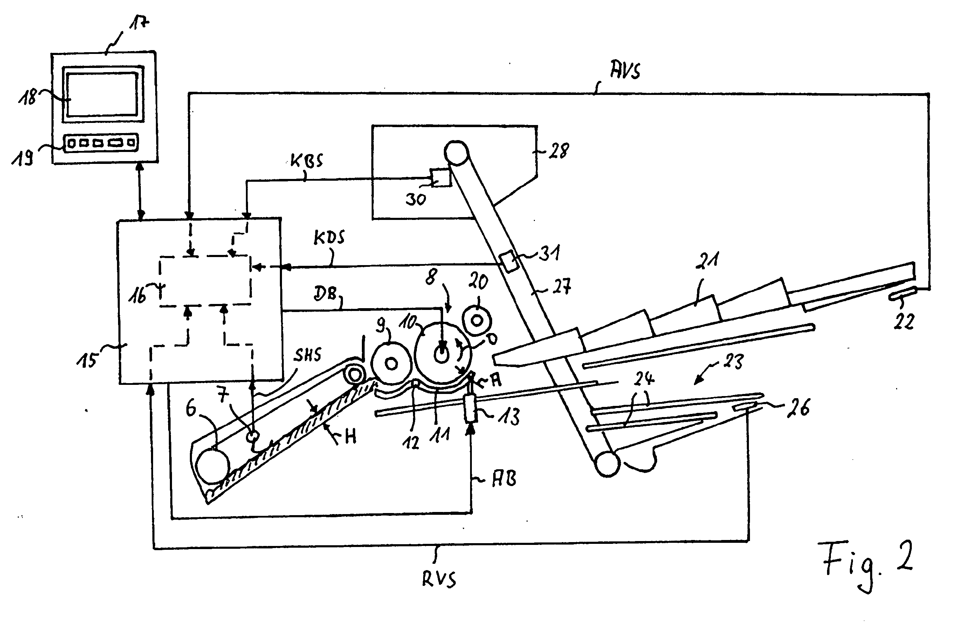

Die Verbindung der einzelnen Sensoreinrichtungen 7, 22, 26, 30, 31 und der Benutzerschnittstelle 17 mit der Steuereinrichtung 15 ist der Übersichtlichkeit wegen in Figur 1 nicht dargestellt. Stattdessen findet sich eine etwas detailliertere Darstellung in Figur 2, auf die für die weiteren Erläuterungen der Erfindung verwiesen wird.

Das von dem Taster 7 im Einzugskanal 6 erzeugte Signal SHS ist direkt proportional zur Schichthöhe H im Einzugskanal 6 und somit proportional zum Emtegutdurchsatz. Das von dem Klopfsensor 22 am hinteren Ende der Abscheideeinrichtung 21 erzeugte Signal AVS ist im Wesentlichen proportional zu den an der Abscheideeinrichtung 21 auftretenden Verlusten. Ebenso ist das Signal RVS des Sensors 26 in der Reinigungseinrichtung 23 ein Maß für die Kornverluste an der Reinigungseinrichtung 23.

Diese drei Signale SHS, AVS, RVS sowie das von der Kombruchdetektoreinrichtung 30 erzeugte Signal KBS und das Signal KDS des Ertragsmessgeräts 31 werden einer Erntegutdurchsatz-Kontrolleinrichtung 16 der Steuereinrichtung 15 zugeführt. Die Steuereinrichtung 15 ist hierbei als ein Block schematisch dargestellt, in welchem die Erntegutdurchsatz-Kontrolleinrichtung 16 integriert ist. Die Steuereinrichtung 15 kann in üblicher Weise aus Hardware- und/oder Softwarekomponenten aufgebaut sein. In der Regel umfasst diese Steuereinrichtung 15 einen Prozessor oder mehrere untereinander vernetzte Prozessoren, auf denen entsprechende Software zur Steuerung der einzelnen Komponenten und zur Auswertung der Messsignale implementiert ist. Über geeignete Schnittstellen kann die Steuereinrichtung die Signale SHS, AVS, RVS, KBS, KDS empfangen und Steuerbefehle AB, DB ausgegeben. Die Erntegutdurchsatz-Kontrolleinrichtung 16 kann dabei, wie hier dargestellt, als Untermodul innerhalb der Steuereinrichtung 15 ausgebildet sein. Grundsätzlich kann dieser Teil der Steuereinrichtung aber auch separat von den übrigen Komponenten der Steuereinrichtung aufgebaut sein. Diese für die Erfindung benötigten Komponenten können auch auf einer bereits in einer Erntemaschine vorhandenen elektronischen Hardware- und Softwareplattform (z. B. das elektronische Bordinformationssystem CEBIS der Firma CLAAS) aufsetzen.

Die Erntegutdurchsatz-Kontrolleinrichtung 16 wertet die von den einzelnen Sensoren 4, 22, 26, 30, 31 zur Verfügung gestellten Signale EDS, RVS, AVS, KDS, KBS aus und bestimmt aus einem der Signale oder einer Kombination mehrerer Signale, beispielsweise anhand des Verhältnisses zweier Signale zueinander, die Abweichungen des aktuellen Emtegutdurchsatzes vom optimalen Soll-Erntegutdurchsatz, auf den die Maschinenparameter optimiert wurden.

Als einfachste Möglichkeit kann unmittelbar das vom Schichthöhenmesser 7 im Emteguteinzug 6 übermittelte Signal SMS als Maß für den aktuellen Emtegutdurchsatz herangezogen werden.

Ebenso ist es aber auch möglich, die Verluste an der Abscheideeinrichtung 21 und/oder der Reinigungseinrichtung 23 als Maß für die Abweichungen vom Soll-Erntegutdurchsatz heranzuziehen. Hierbei ist zu berücksichtigen, dass normalerweise bei gleichbleibender Einstellung des Dreschwerks 8 der Verlust proportional zum Durchsatz ansteigt, da ja zwangsläufig mit zunehmender Emtegutmenge die Abscheideeinrichtung 21 stärker belastet wird. Somit wird in der Regel bei einem Absenken des Emtegutdurchsatzes das Abscheideverlustsignal AVS des am Ende der Abscheideeinrichtung 21 befindlichen Sensors 22 ebenfalls absinken. Gleichzeitig sollte bei sinkendem Emtegutdurchsatz und gleichbleibender Einstellung des Dreschwerks 8 der Körnerbruchanteil steigen, was sich im Kornbruchsignal KBS des Körnerbruchdetektors 30 niederschlägt, so dass dieses Signal KBS insbesondere in Kombination mit dem Abscheideverlustsignal AVS herangezogen werden kann, um eine Abweichung des tatsächlichen Emtegutdurchsatzes vom Soll-Emtegutdurchsatz nach unten zu registrieren. Sofern der Emtegutdurchsatz über den Soll-Erntegutdurchsatz ansteigt, ist davon auszugehen, dass die optimierte Dreschtrommeldrehzahl D nicht mehr ausreicht und daher die Kömer nicht mehr richtig aus den Ähren gelöst werden. Somit steigt insbesondere die Reinigungsbelastung an, so dass auch das Reinigungsverlustsignal RVS des Verlustsensors 26 in der Reinigungseinrichtung 23 ansteigt. Ein weiteres Indiz dafür, ob die Dreschtrommeldrehzahl D für den aktuellen Gesamtdurchsatz zu gering ist, ist auch das Verhältnis zwischen dem Gesamt-Emtegutdurchsatz und dem Korndurchsatz.

Es wird an dieser Stelle ausdrücklich darauf hingewiesen, dass ein erfindungsgemäßer Mähdrescher nicht notwendigerweise alle diese Sensoren aufweisen muss. Im einfachsten Fall kann die Erfindung auch beispielsweise nur mit einem Schichthöhensensor 7 im Emteguteinzug 6 realisiert werden. Da die meisten modernen Mähdrescher aber ohnehin die verschiedensten Sensoren aufweisen, ist es sinnvoll, alle vorhandenen Messsignale in der Emtegutdurchsatz-Kontrolleinrichtung auszuwerten, um zu einer möglichst schnellen und sicheren Diagnose zu kommen.

In Abhängigkeit der von der Erntegutdurchsatz-Kontrolleinrichtung 16 ermittelten Abweichungen des Emtegutdurchsatzes vom Soll-Erntegutdurchsatz wird dann das Dreschwerk 8 angesteuert. Hierzu kann die Steuereinrichtung 15 an einen Variator (nicht dargestellt) einen Drehzahlbefehl DB ausgeben, um die Dreschtrommeldrehzahl D zu erhöhen oder zu reduzieren. Außerdem kann die Steuereinrichtung 15 mit einem Abstandsbefehl AB ein am hinteren Ende, d. h. am Gutausgang des Dreschkorbs 11 angeordnetes Stellglied 13 so ansteuern, dass der Dreschkorb 11, der an seinem in Gutflussrichtung vorderen Ende um eine Schwenkachse 12 schwenkbar befestigt ist, in gewünschter Weise zur Dreschtrommel 10 verschwenkt wird.

Um welches Maß die Dreschtrommeldrehzahl D und der Dreschkorbabstand A jeweils verstellt werden, um auf die Abweichungen des Emtegutdurchsatzes vom Soll-Erntegutdurchsatz zu reagieren, ist durch Funktionen vorgegeben, welche in einer Speichereinrichtung (nicht dargestellt) der Steuereinrichtung 15 hinterlegt sind.

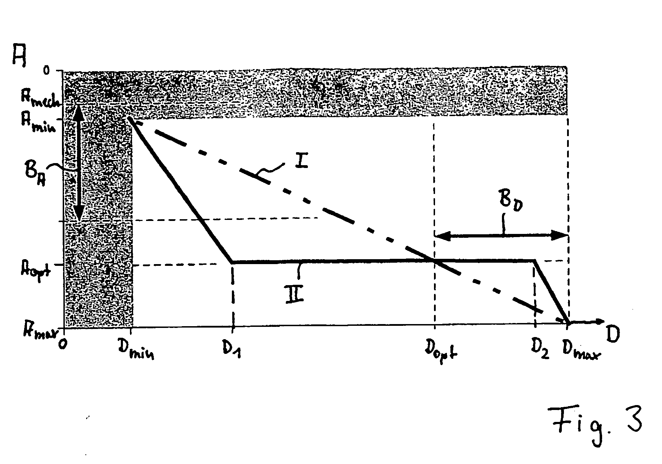

Figur 3 zeigt als Beispiel zwei Funktionen I, II, durch die vorgegeben wird, wie der Korbabstand A jeweils bei einer bestimmten Dreschtrommeldrehzahl einzustellen ist. Aufgetragen ist hier jeweils der Dreschkorbabstand A über der Dreschtrommeldrehzahl D. Die Dreschtrommeldrehzahl D ist zwischen den Extrempunkten Dₘᵢₙ als minimale Dreschtrommeldrehzahl und Dₘₐₓ als maximale Dreschtrommeldrehzahl verstellbar. Der Dreschkorbabstand A kann zwischen dem maximalen Dreschkorbabstand Aₘₐₓ und dem minimalen Dreschkorbabstand Aₘᵢₙ verstellt werden. Der außerhalb liegende, schraffierte Bereich ist ein verbotener Bereich. Der minimale Dreschkorbabstand A liegt dabei noch über dem mechanisch möglichen Dreschkorbabstand A_{mech,} an dem der Dreschkorb 11 direkt an der Dreschtrommel 10 anliegen würde. Weiterhin sind zwei Bereiche B_{A} und B_{D} dargestellt, in denen die Körnerbruchgefahr aufgrund eines zu geringen Korbabstands A oder einer zu hohen Drehzahl D erhöht ist.

Bei dem vorgegebenen Soll-Erntegutdurchsatz sollten die optimale Dreschtrommeldrehzahl Dₒₚₜ und der optimale Dreschkorbabstand Aₒₚₜ eingestellt sein.

Sofern der Erntegutdurchsatz vom Soll-Erntegutdurchsatz abweicht, hinsichtlich, dessen die Optimalwerte Aₒₚₜ und Dₒₚₜ gewählt wurden, wird entsprechend der Abweichungen die Dreschtrommeldrehzahl D und/oder der Dreschkorbabstand A verringert oder erhöht. Bei beiden Kurven I, II wird dabei mit sinkendem Emtegutdurchsatz kontinuierlich die Dreschtrommeldrehzahl D herabgesetzt und bei steigendem Erntegutdurchsatz die Dreschtrommeldrehzahl D heraufgesetzt, wobei natürlich die jeweiligen Grenzwerte Dₘₐₓ, Dmin zu beachten sind.

Die beiden Kurven I, II zeigen dabei zwei verschiedene Möglichkeiten, nach denen die Verstellung des Dreschkorbabstands A in Abhängigkeit von der gewählten Dreschtrommeldrehzahl D und somit in Abhängigkeit von den Abweichungen des Emtegutdurchsatzes vom Soll-Erntegutdurchsatz erfolgten könnte. Hierbei ist zu berücksichtigen, dass sich der Dreschprozess ver einfacht in zwei wesentliche Vorgänge unterteilen lässt. Der eine Vorgang ist das Lösen der Kömer aus den Ähren. Dieser Vorgang wird im Wesentlichen durch die Dreschtrommeldrehzahl D beeinflusst. Die Schlagleisten der Dreschtrommel 10 schlagen dabei mehr oder weniger stark auf die Strohmatte und lösen damit die Kömer aus den Ähren. Dieser Vorgang hat die Nebenwirkung, dass aufgrund der Beschleunigung die Körner beschädigt werden können, d. h. dass Kömerbruch auftritt. Der zweite Vorgang ist die Entgrannung oder Entspelzung. Dieser Vorgang wird im Wesentlichen durch die Reibwirkung in der Strohmatte erzeugt. Der Reibeinfluss wird dagegen wiederum wesentlich durch den Korbabstand A beeinflusst. Hierbei ist zu beachten, dass ein zu enger Korb zu Kombeschädigungen führen kann.

Kurve I gilt für Getreide, bei dem der Korbabstand A einen großen Einfluss auf den Dreschprozess hat. Hierbei handelt es sich um solche Getreide, bei denen es notwendig ist, Reibung über eine relativ enge Korbstellung zu erzeugen, wie z. B. bei Gerste, bei der die Grannen durch Reibung entfernt werden. Bei solchen Erntegutarten sollte der Korbabstand A mit niedriger werdendem Emtegutdurchsatz kontinuierlich verringert werden, d. h. der Korbabstand A wird an die Höhe H der Emtegutmatte angepasst, um die Grundreibung aufrechtzuerhalten.

Bei anderen Emtegutsorten wie z. B. bei reifem Weizen, bei welchem die Kömer im Wesentlichen nur durch das Schlagen der Dreschtrommelleisten auf die Emtegutmatte aus den Ähren entfernt werden, ist eine Entgrannung in der Regel nicht erforderlich. Bei diesen Erntegutarten reicht es aus, bei konstantem Korbabstand A die Dreschtrommeldrehzahl D proportional zum Emtegutdurchsatz zu verstellen und nur in den extremeren Bereichen, d. h. unterhalb einer Dreschtrommeldrehzahl D₁ und oberhalb einer Dreschtrommeldrehzahl D₂ den Dreschkorbabstand A anzupassen, wie dies in Kurve II dargestellt ist.

Neben den in Figur 3 dargestellten verschiedenen Kurven I, II können der Steuerung auch noch weitere Kurven für die verschiedensten spezifischen Erntegutarten und/oder für unterschiedliche Ernteguteigenschaften wie beispielsweise den Reifegrad vorgegeben sein. Die Fruchtauswahl kann beispielsweise innerhalb eines Menüs eines elektronischen Bordinformationssystems bestimmt werden. Sofern - wie in dem dargestellten Beispiel - nur zwei verschiedene Verstellkurven verwendet werden, können die jeweiligen Ernteguttypen auch den jeweiligen Kurven zugeordnet werden, was ebenfalls automatisch durch ein elektronisches Bordinformationssystem anhand einer hinterlegten Klassifikations-Tabelle oder dergleichen geschehen kann.

Eine andere Möglichkeit festzustellen, entlang welcher Verstellkurve I, II die Verstellung vorzunehmen ist, ist eine Messung der Komabscheidung bei konstanten Erntebedingungen, d. h. bei konstantem Emtegutdurchsatz. Es wird dann testweise während der Emtefahrt der Dreschkorbabstand variiert. Ändert sich die Belastung der Abscheidevorrichtung in Verbindung mit kleinen Veränderungen des Dreschkorbabstands, so ist die Verstellkurve I zu wählen, andernfalls die Verstellkurve II.

Die Erfindung ermöglicht insgesamt eine sehr schnelle automatische Reaktion des Dreschwerks auf vorübergehende Durchsatzänderungen, ohne dass aufwändig sämtliche Maschinenparameter neu zu justieren sind. Der besondere Nutzen der Erfindung zeigt sich daher insbesondere dann, wenn nur vorübergehend innerhalb des Erntegutbestandes hinderliche Emteguteigenschaften auftreten. Ein Beispiel hierfür ist eine Lagergetreidestelle im Feld, an der das Getreide flach auf den Boden gedrückt ist. Die Emtegeschwindigkeit muss bei Durchfahren dieses Bereiches herabgesetzt werden, so dass der Emtegutdurchsatz automatisch vorübergehend abnimmt. Entsprechend der Getreideart werden dann vollautomatisch die Dreschtrornmeldrehzahl und der Korbabstand an den Emtegutdurchsatz angepasst. Löst sich anschließend die hinderliche Lagergetreidestelle im Feld auf und kann im bestehenden Bestand weitergeerntet werden, so werden ebenso vollautomatisch wieder die optimale Dreschtrommeldrehzahl und der optimale Dreschkorbabstand eingestellt, so dass ohne ein Zutun des Fahrers wieder mit dem maximalen Erntegutdurchsatz bei vertretbarem Verlustanteil gearbeitet werden kann.

Aus Sicherheitsgründen ist das System so ausgelegt, dass der Fahrer jederzeit während eines Ernteeinsatzes in der Lage ist, einzelne oder alle eingestellten Maschinenparameter manuell zu übersteuern.

Es wird abschließend noch einmal darauf hingewiesen, dass es sich bei dem in den Figuren dargestellten Mähdrescher und der Steuerung sowie dem im Zusammenhang damit erläuterten konkreten Verfahren lediglich um Ausführungsbeispiele handelt, welche vom Fachmann in vielfacher Hinsicht variiert werden können, ohne den Rahmen der Erfindung zu verlassen. So können beispielsweise anstelle oder zusätzlich zu den genannten Sensoren auch noch weitere Sensoren, beispielsweise Drehzahlmesser, Beschleunigungssensoren oder ähnliches eingesetzt werden. Insbesondere kann auch ein Geschwindigkeitsmesser des Mähdreschers als weitere Sensoreinrichtung herangezogen werden, da in der Regel auch die Fahrtgeschwindigkeit ein gutes Indiz für den Emtegutdurchsatz ist.

### Bezugszeichenliste

- 1: Mähdrescher
- 2: Mähtisch
- 3: Haspel
- 4: Mäheinrichtung
- 5: Einzugsschnecke
- 6: Einzugskanal
- 7: Schichthöhensensor
- 8: Dreschwerk
- 9: Vorbeschleunigertrommel
- 10: Dreschtrommel
- 11: Dreschkorb
- 12: Schwenkachse
- 13: Stellglied
- 14: Wendetrommel
- 15: Steuereinrichtung
- 16: Erntegutdurchsatz-Kontrolleinrichtunn
- 17: Benutzerschnittstelle
- 18: Display
- 19: Tasten
- 20: Wendetrommel
- 21: Hordenschüttler
- 22: Sensoreinrichtung
- 23: Reinigungseinrichtung
- 24: Sieb
- 25: Gebläse
- 26: Sensoreinrichtung
- 27: Elevator
- 28: Korntank
- 29: Tankentleerförderer
- 30: Kornbruchdetektoreinrichtung
- 31: Ertragsmessgerät
- A: Korbabstand
- D: Dreschtrommeldrehzahl
- H: Schichthöhe
- AB: Abstandsbefehl
- DB: Drehzahlbefehl
- KBS: Kombruchsignal
- SHS: Schichthöhensignal
- AVS: Abscheideverlustsignal
- RVS: Reinigungsverlustsignal
- KDS: Korndurchsatzsignal

## Patentansprüche

1. Verfahren zur Steuerung eines Dreschwerks (8) eines Mähdreschers (1), bei dem bestimmte Parameter (A, D) des Dreschwerks (8) hinsichtlich eines für bestimmte Erntebedingungen festgelegten Soll-Erntegutdurchsatzes auf einen Optimalwert (A_{opt,} Dₒₚₜ) eingestellt werden, und automatisch eine Abweichung des aktuellen Erntegutdurchsatzes vom Soll-Erntegutdurchsatz erkannt und daraufhin zumindest ein Dreschwerkparameter (A, D) zur Anpassung an den aktuellen Erntegutdurchsatz verstellt wird
**dadurch gekennzeichnet, dass**
das Dreschwerk (8) durch Verstellung einer Dreschtrommeldrehzahl (D) und/oder eines Dreschkorbabstands (A) an den aktuellen Emtegutdurchsatz angepasst wird und dass der Dreschkorbabstand (A) gemäß einer vorgegebenen Funktion (I, II) in Abhängigkeit von der aktuellen Dreschtrommeldrehzahl (D) verstellt wird.

2. Verfahren nach Anspruch 1, **dadurch gekennzeichnet, dass** mit abnehmendem Emtegutdurchsatz (E) dle Dreschtrommeldrehzahl (D) verringert wird.

3. Verfahren nach Anspruch 2, **dadurch gekennzeichnet, dass** mit abnehmendem Erntegutdurchsatz (E} der Dreschkorbabstand (A) verringert wird.

4. Verfahren nach einem der Ansprüche 2 bis 3, **dadurch gekennzeichnet, dass** die Dreschtrommeldrehzahl (D) und/oder der Dreschkorbabstand (A) in Abhängigkeit von einer Ernteguteigenschaft verstellt werden.

5. Verfahren nach einem der Ansprüche 1 bis 4, **dadurch gekennzeichnet, dass** erst dann ein Dreschwerkparameter (A, D) verstellt wird, wenn der aktuelle Emtegutdurchsatz um einen bestimmten Schwellwert und/oder eine bestimmte erste Zeitspanne vom Soll-Erntegutdurchsatz abweicht.

6. Verfahren nach einem der Ansprüche 1.bis 5, **dadurch gekennzeichnet, dass** der aktuelle Emtegutdurchsatz in einem Ernteguteinzug (6) gemessen wird.

7. Verfahren nach einem der Ansprüche 1 bis 6, **dadurch gekennzeichnet, dass** eine Abweichung des aktuellen Erntegutdurchsatzes vom Soll-Erntegutdurchsatz anhand einer Verlustmenge an einem Ausgang einer Abscheldeeinrichtung (21) und/oder an einem Ausgang einer Reinigungseinrichtung (23) bestimmt wird.

8. Verfahren nach einem der Ansprüche 1 bis 7, **dadurch gekennzeichnet, dass** eine Abweichung des aktuellen Erntegutdurchsatzes vom Soll-Erntegutdurchsatz anhand eines Bruchkornanteils bestimmt wird.

9. Verfahren nach einem der Ansprüche 1 bis 8, **dadurch gekennzeichnet, dass** eine Abweichung des aktuellen Erntegutdurchsatzes vom Soll-Erntegutdurchsatz durch Messung eines Drehmoments an einer Antriebswelle und/oder durch Messung eines Abtriebsmoments eines Antriebsmotors ermittelt wird.

10. Verfahren nach einem der Ansprüche 1 bis 9, **dadurch gekennzeichnet, dass** ein verstellter Dreschwerkparameter (A, D) automatisch auf den Optimalwert (Aₒₚₜ, Dₒₚₜ) zurückgestellt wird, Wenn der aktuelle Emtegutdurchsatz wieder dem Soll-Erntegutdurchsatz entspricht oder um weniger als einen bestimmten Schwellwert vom Soll-Erntegutdurchsatz abweicht.

11. Verfahren nach einem der Ansprüche 1 bis 10, **dadurch gekennzeichnet, dass** nach Ablauf einer bestimmten zweiten Zeitspanne, In welcher der Soll-Erntegutdurchsatz nicht erreicht wird oder um mehr als einen bestimmten Schwellwert davon abweicht, automatisch eine Neujustage weiterer einstellbarer Parameter von verschiedenen Arbeitsorganen des Mähdreschers (1) erfolgt und/oder einem Bediener angeboten wird, diese einstellbaren Parameter optimal hinsichtlich des aktuellen Erntegutdurchsatzes als neuen Soll-Erntegutdurchsatz einzustellen.

12. Mähdrescher (1) mit einem Dreschwerk (8) und einer Steuereinrichtung (15), um bestimmte Parameter (A, D) des Dreschwerks (8) hinsichtlich eines für bestimmte Erntebedingungen festgelegten Soll-Erntegutdurchsatzes auf einen Optimalwert (Aₒₚₜ, Dₒₚₜ) einzustellen, wobei
die Steuereinrichtung (15) eine Erntegutdurchsatz-Kontrolleinrichtung (16) umfasst, welche automatisch eine Abwelchung des aktuellen Erntegutdurchsatzes vom Soll-Erntegutdurchsatz erkennt, und die Steuereinrichtung (15) derart ausgebildet ist, dass sie bei einer solchen Abweichung zumindest einen Dreschwerkparameter (A, D) zur Anpassung an den aktuellen Erntegutdurchsatz verstellt, **dadurch gekennzeichnet, dass** dabei das Dreschwerk (8) durch Verstellung einer Dreschtrommeldrehzahl (D) und/oder eines Dreschkorbabstands (A) an den aktuellen Emtegutdurchsatz angepasst wird und dass der Dresch- ' korbabstand (A) gemäß einer vorgegebenen in der Speichereinrichtung des Steuereinrichtung hinterlegten Funktion (I, II) in Abhängigkeit von der aktuellen Dreschtrommeldrehzahl (D) verstellt wird.

13. Mähdrescher nach Anspruch 12, gekennzelchnet durch elne In einem Ernteguteinzug (6) angeordnete Sensoreinrichtung (7) zur Ermittlung des aktuellen Erntegutdurchsatzes.

14. Mähdrescher nach Anspruch 13, **dadurch gekennzeichnet, dass** die Sensoreinrichtung (7) elnen Taster (7) zur Ermittlung einer Erntegutschichthöhe (H) im Ernteguteinzug (6) umfasst.

15. Mähdrescher nach einem.der Ansprüche 12 bis 14, **gekennzeichnet durch** einen an einem Ausgang einer Abscheideeinrichtung (21) und/oder einen an einem Ausgang einer Reinigungseinrichtung (23) angeordneten Verlustmengensensor (22, 26).

16. Mähdrescher nach einem der Ansprüche 12 bis 15, **gekennzeichnet durch** eine Bruchkorn-Sensoreinrichtung (30).

17. Mähdresoher nach einem der Ansprüche 12 bis 16, gekennzelchnet durch eine Messeinrichtung zur Ermittlung eines Drehmoments an einer Antriebswelle und/oder eines Abtriebsmoments eines Antriebsmotors.

## Claims

1. A method of controlling a threshing mechanism (8) of a combine harvester (1) in which certain parameters (A, D) of the threshing mechanism (8) are set to an optimum value (Aₒₚₜ, Dₒₚₜ) in regard to a target crop material throughput established for given harvesting conditions and a deviation of the current crop material throughput from the target crop material throughput is automatically detected and thereupon at least one threshing mechanism parameter (A, D) is adjusted for adaptation to the current crop material throughput,
**characterised in that** the threshing mechanism (8) is adapted to the current crop material throughput by adjustment of a threshing drum rotary speed (D) and/or a threshing concave spacing (A) and the threshing concave spacing (A) is adjusted in accordance with a predetermined function (I, II) in dependence on the current threshing drum rotary speed (D).

2. A method according to claim 1 **characterised in that** the threshing drum rotary speed (D) is reduced with decreasing crop material throughput (E).

3. A method according to claim 2 **characterised in that** the threshing concave spacing (A) is reduced with decreasing crop material throughput (E).

4. A method according to one of claims 2 and 3 **characterised in that** the threshing drum rotary speed (D) and/or the threshing concave spacing (A) is adjusted in dependence on a crop material property.

5. A method according to one of claims 1 to 4 **characterised in that** a threshing mechanism parameter (A, D) is adjusted only when the current crop material throughput deviates from the target crop material throughput by a given threshold value and/or a given first period of time.

6. A method according to one of claims 1 to 5 **characterised in that** the current crop material throughput is measured in a crop material intake (6).

7. A method according to one of claims 1 to 6 **characterised in that** a deviation of the current crop material throughput from the target crop material throughput is determined on the basis of a loss quantity at an exit of a separating device (21) and/or at an exit of a cleaning device (23).

8. A method according to one of claims 1 to 7 **characterised in that** a deviation of the current crop material throughput from the target crop material throughput is determined on the basis of a broken grain component.

9. A method according to one of claims 1 to 8 **characterised in that** a deviation of the current crop material throughput from the target crop material throughput is ascertained by measuring a torque at a drive shaft and/or by measuring a drive output moment of a drive engine.

10. A method according to one of claims 1 to 9 **characterised in that** an adjusted threshing mechanism parameter (A, D) is automatically reset to the optimum value (Aₒₚₜ, Dₒₚₜ) if the current crop material throughput corresponds to the target crop material throughput again or deviates from the target crop material throughput by less than a given threshold value.

11. A method according to one of claims 1 to 10 **characterised in that** after the elapse of a given second period of time in which the target crop material throughput is not reached or deviates therefrom by more than a given threshold value re-adjustment of further adjustable parameters of various working members of the combine harvester (1) is automatically effected and/or an operator is offered adjustment of those adjustable parameters in optimum fashion in regard to the current crop material throughput as a new target crop material throughput.

12. A combine harvester (1) comprising a threshing mechanism (8) and a control device (15) for adjusting certain parameters (A, D) of the threshing mechanism (8) to an optimum value (Aₒₚₜ, Dₒₚₜ) in regard to a target crop material throughput established for given harvesting conditions, wherein the control device (15) includes a crop material monitoring device (16) which automatically detects a deviation of the current crop material throughput from the target crop material throughput and the control device (15) is so adapted that in the case of such a deviation it adjusts at least one threshing mechanism parameter (A, D) for adaptation to the current crop material throughput, **characterised in that in that** case the threshing mechanism (8) is adapted to the current crop material throughput by adjustment of a threshing drum rotary speed (D) and/or a threshing concave spacing (A) and the threshing concave spacing (A) is adjusted in accordance with a predetermined function (I, II) stored in the memory device of the control device in dependence on the current threshing drum rotary speed (D).

13. A combine harvester according to claim 12 **characterised by** a sensor device (7) arranged in a crop material intake (6) for ascertaining the current crop material throughput.

14. A combine harvester according to claim 13 **characterised in that** the sensor device (7) includes a sensor member (7) for ascertaining a crop material layer height (H) in the crop material intake (6).

15. A combine harvester according to one of claims 12 to 14 **characterised by** a loss amount sensor (22, 26) arranged at an exit of a separating device (21) and/or arranged at an exit of a cleaning device (23).

16. A combine harvester according to one of claims 12 to 15 **characterised by** a broken grain sensor device (30).

17. A combine harvester according to one of claims 12 to 16 **characterised by** a measuring device for ascertaining a torque at a drive shaft and/or a drive output moment of a drive engine.

## Revendications

1. Procédé de commande d'un organe de battage (8) d'une moissonneuse-batteuse (1), selon lequel certains paramètres (A, D) de l'organe de battage (8) sont réglés à une valeur optimale (Aₒₚₜ, Dₒₚₜ) du point de vue d'un débit de produit de récolte de consigne défini pour certaines conditions de récolte, et un écart entre le débit de produit de récolte réel et le débit de produit de récolte de consigne est détecté automatiquement, après quoi au moins un paramètre de l'organe de battage (A, D) est modifié pour être adapté au débit de produit de récolte réel, **caractérisé en ce que** l'organe de battage (8) est adapté au débit de produit de récolte réel par modification d'une vitesse de rotation du batteur (D) et/ou d'une distance du contre-batteur (A), et **en ce que** la distance du contre-batteur (A) est modifiée selon une fonction prédéfinie (I, II) en fonction de la vitesse de rotation réelle du batteur (D).

2. Procédé selon la revendication 1, **caractérisé en ce que** la vitesse de rotation du batteur (D) est réduite lorsque le débit de produit de récolte (E) diminue.

3. Procédé selon la revendication 2, **caractérisé en ce que** la distance du contre-batteur (A) est réduite lorsque le débit de produit de récolte (E) diminue.

4. Procédé selon l'une des revendications 2 à 3, **caractérisé en ce que** la vitesse de rotation du batteur (D) et/ou la distance du contre-batteur (A) sont modifiées en fonction d'une propriété du produit de récolte.

5. Procédé selon l'une des revendications 1 à 4, **caractérisé en ce qu'**un paramètre de l'organe de battage (A, D) est modifié seulement si le débit de produit de récolte réel s'écarte du débit de produit de récolte de consigne selon une valeur seuil définie et/ou selon un premier laps de temps défini.

6. Procédé selon l'une des revendications 1 à 5, **caractérisé en ce que** le débit de produit de récolte réel est mesuré dans une alimentation de produit de récolte (6).

7. Procédé selon l'une des revendications 1 à 6, **caractérisé en ce qu'**un écart entre le débit de produit de récolte réel et le débit de produit de récolte de consigne est déterminé à partir d'une quantité de pertes à une sortie d'un dispositif de séparation (21) et/ou à une sortie d'un dispositif de nettoyage (23).

8. Procédé selon l'une des revendications 1 à 7, **caractérisé en ce qu'**un écart entre le débit de produit de récolte réel et le débit de produit de récolte de consigne est déterminé à partir d'une proportion de grains cassés.

9. Procédé selon l'une des revendications 1 à 8, **caractérisé en ce qu'**un écart entre le débit de produit de récolte réel et le débit de produit de récolte de consigne est déterminé par mesure d'un couple sur un arbre d'entraînement et/ou par mesure d'un couple de sortie d'un moteur d'entraînement.

10. Procédé selon l'une des revendications 1 à 9, **caractérisé en ce qu'**un paramètre modifié de l'organe de battage (A, D) est remis automatiquement à la valeur optimale (Aₒₚₜ, Dₒₚₜ) lorsque le débit de produit de récolte réel correspond de nouveau au débit de produit de récolte de consigne ou s'écarte du débit de produit de récolte de consigne de moins d'une valeur seuil définie.

11. Procédé selon l'une des revendications 1 à 10, **caractérisé en ce qu'**à l'expiration d'un deuxième laps de temps défini, dans lequel le débit de produit de récolte de consigne n'est pas atteint ou l'écart par rapport à celui-ci est supérieur à une valeur seuil définie, un réajustage d'autres paramètres réglables de différents organes de travail de la moissonneuse-batteuse (1) est effectué automatiquement et/ou il est proposé à un opérateur de régler ces paramètres réglables de façon optimale du point de vue du débit de produit de récolte réel en tant que nouveau débit de produit de récolte de consigne.

12. Moissonneuse-batteuse (1) pourvue d'un organe de battage (8) et d'un dispositif de commande (15) pour régler certains paramètres (A, D) de l'organe de battage (8) à une valeur optimale (Aₒₚₜ, Dₒₚₜ) du point de vue d'un débit de produit de récolte de consigne défini pour certaines conditions de récolte, le dispositif de commande (15) comprenant un dispositif de contrôle du débit de produit de récolte (16) qui détecte automatiquement un écart entre le débit de produit de récolte réel et le débit de produit de récolte de consigne, le dispositif de commande (15) étant conçu de façon à modifier, en présence d'un tel écart, au moins un paramètre de l'organe de battage (A, D) pour l'adapter au débit de produit de récolte réel, **caractérisée en ce que**, à cet effet, le batteur (8) est adapté au débit de produit de récolte réel par modification d'une vitesse de rotation du batteur (D) et/ou d'une distance du contre-batteur (A), et **en ce que** la distance du contre-batteur (A) est modifiée selon une fonction prédéfinie (I, II), stockée dans le dispositif de mémorisation du dispositif de commande, en fonction de la vitesse de rotation réelle du batteur (D).

13. Moissonneuse-batteuse selon la revendication 12, **caractérisée par** un dispositif de détection (7) disposé dans une alimentation de produit de récolte (6) pour déterminer le débit de produit de récolte réel.

14. Moissonneuse-batteuse selon la revendication 13, **caractérisé en ce que** le dispositif de détection (7) comprend un palpeur (7) pour déterminer une hauteur de couche de produit de récolte (H) dans l'alimentation de produit de récolte (6).

15. Moissonneuse-batteuse selon l'une des revendications 12 à 14, **caractérisée par** un capteur de quantité de pertes (22, 26) disposé à une sortie d'un dispositif de séparation (21) et/ou à une sortie d'un dispositif de nettoyage (23).

16. Moissonneuse-batteuse selon l'une des revendications 12 à 15, **caractérisée par** un dispositif de détection de grains cassés (30).

17. Moissonneuse-batteuse selon l'une des revendications 12 à 16, **caractérisée par** un dispositif de mesure pour déterminer un couple sur un arbre d'entraînement et/ou un couple de sortie d'un moteur d'entraînement.
